# EUROPEAN PATENT APPLICATION

(11) **EP 0 899 057 A1**
(43) Date of publication of application: **03.03.1999**
(21) Application number: 98116457.7
(22) Date of filing: 31.08.1998
(51) Int. Cl.: B23Q 16/10

(54) **Indexing mechanism for machine tools**

(30) Priority: 01.09.1997 JP 235772/97
(71) Applicant: Mori Seiki Co., Ltd., Yamatokoriyama-shi, Nara-ken 639-1183 (JP)
(72) Inventor: Ikenaga, Shuji, Mori Seiki Co., Ltd., Yamatokoriyama-shi, Nara-ken, 639-183 (JP)
(74) Representative: Kern, Ralf M., Dipl.-Ing.

(57) **Abstract**

The invention provides an indexing mechanism for machine tools, in which the time required for indexing can be reduced as compared with the 2-piece type, and in which any deterioration of the indexing precision can be avoided by preventing the couplings from wearing. A tool post indexing mechanism for a composite-process lathe, in which a tool post body 11 with a tool T affixed thereto is rotation-indexably and clampably mounted on a support plate (base) 9, comprises a connecting coupling 32 provided advanceably and retreatably so as to be engaged with both a rotational-side coupling 26 fixed to a rotating table 20 with the tool post body 11 mounted thereon, and a stationary-side coupling 27 fixed to an anchor block 31 on the support plate 9 side, and a spring 33 (gap forming means) which causes a gap "a" to be generated between the rotational-side coupling 26 and the support plate 9 by an operation of the connecting coupling 32 in such a direction that the engagement is released.

## Description

### BACKGROUND OF THE INVENTION

The present invention relates to an indexing mechanism for machine tools, in which a rotating part to which a tool or work is affixed is rotation-indexably and clampably mounted onto a base, for example, a tool post indexing mechanism for composite-process lathes.

Conventionally, there has been provided a composite-process lathe in which a seat is turnably mounted onto the base of a column, a tool post body is fixed to the seat, a turning tool or rotating tool is fitted to the tool spindle of the tool post body, and in which the tool post body is indexed to a specified angular position and clamped, allowing both turning process and rotating tool process to be achieved.

Among conventional indexing mechanisms for performing the rotation indexing and clamping of the tool post body, are a 2-piece type indexing mechanism in which rotational-side and stationary-side couplings are provided opposite to the seat and the base, respectively, and a 3-piece type indexing mechanism in which the rotational-side and stationary-side couplings are placed coaxial with each other while a third connecting coupling to be engaged with both couplings is advanceably and retreatably provided.

However, for the conventional 2-piece type indexing mechanism, in the indexing process, the whole tool post body needs to be moved to a position where both couplings are released from the engagement. This causes problems that the amount of operation for indexing is increased to that extent, the indexing time is prolonged to that extent, and that the apparatus becomes large-scale.

Also, for the conventional 3-piece type indexing mechanism, during the turning of the tool post body, the rotational-side coupling affixed to the seat that supports the tool post body slides in contact with the base, so that the rotational-side coupling wears. This leads to a problem that indexing precision in clamping is likely to deteriorate as a result of iterated turning operations.

The present invention having been achieved in view of the above problems of the prior art, an object of the present invention is to provide an indexing mechanism for machine tools, which can reduce the time required for indexing than the 2-piece type one, and which can prevent the rotational-side coupling from wearing so that deterioration in indexing precision during the clamping can be avoided.

In order to achieve the above object, according to the present invention, there is provided an indexing mechanism for machine tools, in which a rotating part to which a tool or work is affixed is rotation-indexably and clampably mounted onto a base, characterized in that a connecting coupling to be engaged with both of a rotational-side coupling fixed to the rotating part and a stationary-side coupling fixed to the base is provided so as to be advanceable and retreatable, and that gap forming means for forming a gap between the rotational-side coupling and the base by an operation of the connecting coupling in such a direction that the engagement is released.

The indexing mechanism for machine tools according to the present invention is provided as a 3-piece coupling type in which the connecting coupling to be engaged with both the rotational-side coupling fixed to the rotating part and the stationary-side coupling fixed on the base side is provided so as to be advanceable and retreatable. Therefore, the clamping operation can be achieved only by advancing and retreating the connecting coupling, so that the indexing time can be reduced as compared with the conventional 2-piece coupling type in which the whole rotating part is moved.

Further, since a gap is generated between the rotational-side coupling and the base by an operation of the connecting coupling in the direction of disengagement, the rotational-side coupling that is affixed to the rotating part and that rotates together with the rotating part can be prevented from sliding and contacting with the base during the indexing process, so that the rotational-side coupling can be prevented from wearing. Thus, any deterioration in indexing precision due to the clamping operation can be prevented.

### BRIEF DESCRIPTION OF THE DRAWINGS

Fig. 1 is a perspective view of a composite-process lathe equipped with an indexing mechanism according to an embodiment of the present invention;
Fig. 2 is a left side view of the composite-process lathe;
Fig. 3 is a sectional view of the indexing mechanism; and
Fig. 4 is an enlarged sectional view of main part of Fig. 3.

### DETAILED DESCRIPTION OF THE PREFERRED EMBODIMENTS

Hereinbelow, an embodiment of the present invention is described with reference to the accompanying drawings.

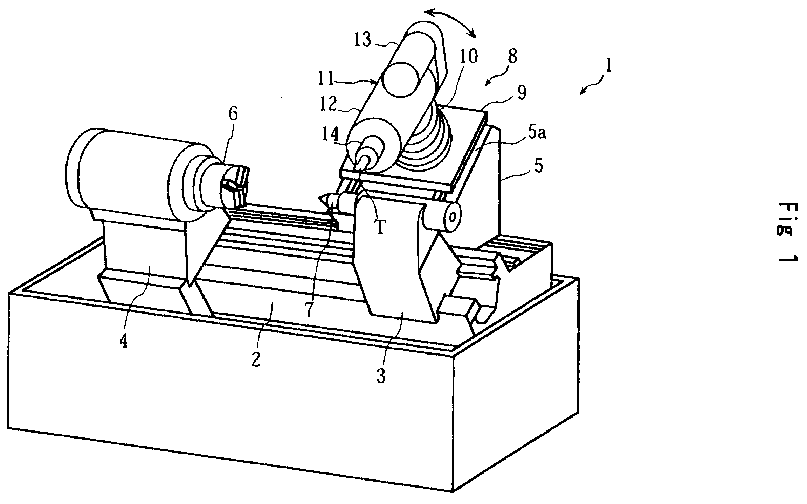

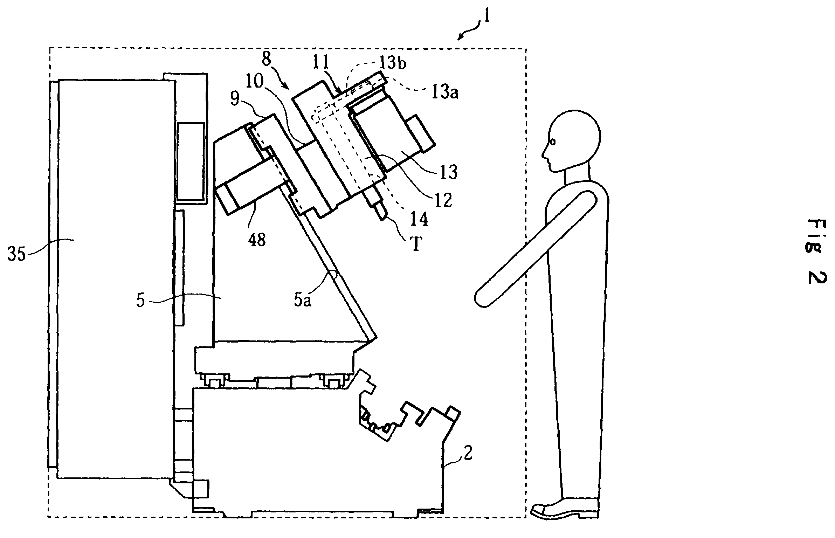

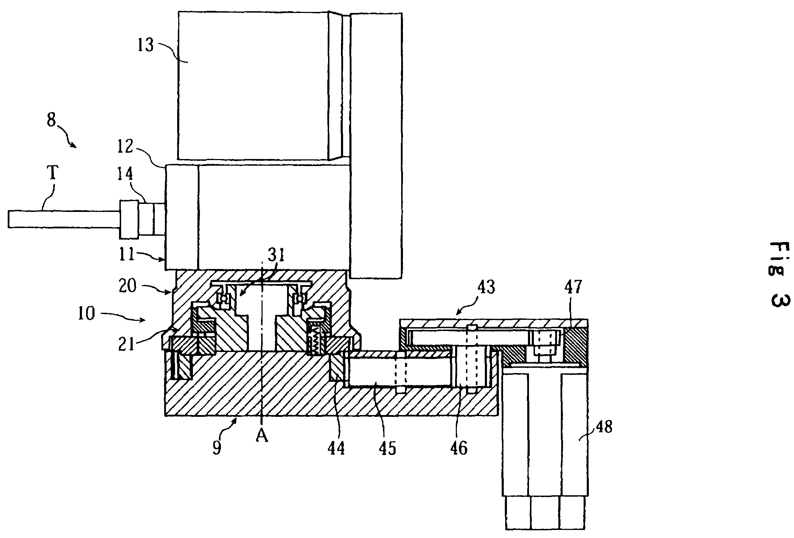

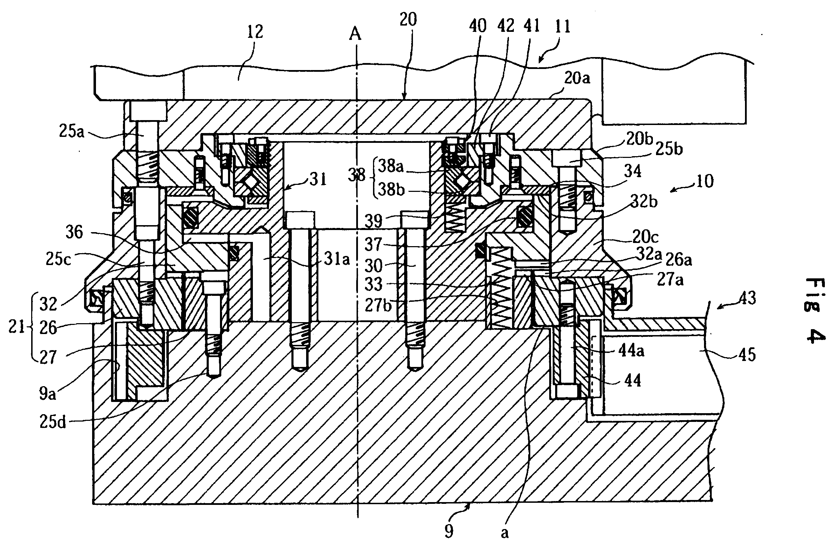

Figs. 1 to 4 are views for explaining a tool post indexing mechanism for composite-process lathes according to one embodiment of the present invention. Figs. 1 and 2 are a perspective view and a left side view, respectively, of the composite-process lathe, Fig. 3 is a sectional view of the indexing mechanism, and Fig. 4 is an enlarge sectional view of main part of Fig. 3. In Fig. 4, the left side part with respect to an axis line A shows a clamped state, and the right side part shows an unclamped state.

Referring to the figures, reference numeral 1 denotes a composite-process lathe (machine tool) enabled to perform both turning process and rotating tool process. This composite-process lathe 1 is roughly so constructed that as viewed from the front of a bed 2, a tailstock 3 is right-and-left movably placed on the right side, a headstock 4 is fixedly placed on the left side, a carriage 5 is right-and-left movably placed on the deep side and that a tool post 8 is mounted on the carriage 5.

The headstock 4 is provided with a chuck 6 for gripping a work, and the chuck 6 is driven into rotation by a spindle motor (not shown). Also, the tailstock 3 is equipped with a center 7 for holding a work in cooperation with the chuck 6. In addition, reference numeral 35 denotes a control board.

The tool post 8 is roughly so constructed that a support plate (base) 9 is obliquely back-and-forth movably placed on a front-descending slope 5a of the carriage 5, and that a tool post body 11 is turnably supported on the support plate 9 via a rotation indexing mechanism 10.

The tool post body 11 comprises a tool spindle 14 on which a tool T is removably fitted at its fore end, a tool headstock 12 for rotatably supporting the tool spindle 14, and a spindle motor 13 which is mounted on the tool headstock 12 and which drives the tool spindle 14 into rotation. It is noted that the rotation of a rotating shaft 13a of the spindle motor 13 is transferred to the tool spindle 14 via a transfer belt 13b.

The rotation indexing mechanism 10, as shown in Figs. 3 and 4, comprises a rotating table 20 for supporting the tool post body 11, an anchor block 31 which is placed in the rotating table 20 coaxially therewith and which is tightened and fixed to the Support plate 9 with a bolt 30, a drive mechanism 43 for rotationally driving the rotating table 20 to a specified indexing angular position, and a clamping mechanism 21 for clamping the rotating table 20 to a specified indexing angular position.

The rotating table 20 comprises a disc-shaped top plate 20a for supporting the tool post body 11, an annular intermediate plate 20b fixed to the lower surface of the top plate 20a with a bolt 25a, and an outer cylinder member 20c fixed to the lower surface of the intermediate plate 20b with a bolt 25b.

The clamping mechanism 21 comprises a rotational-side coupling 26, annular as viewed in plan view, fixed to the lower end face of the outer cylinder member 20c partly forming the rotating table 20, a stationary-side coupling 27, annular as viewed in plan view, which is placed inside the rotational-side coupling 26 coaxially therewith and which is fixed to the upper surface of the support plate 9, and a connecting coupling 32, annular as viewed in plan view, which is axially slidably provided in an annular cylinder space formed by an inner circumferential surface of the outer cylinder member 20c and an outer circumferential surface of the anchor block 31 serving as an inner cylinder member. In addition, between the inner circumferential surface of the outer cylinder member 20c and the outer circumferential surface of the connecting coupling 32 is provided a gap which allows the members to rotate relatively to each other.

The connecting coupling 32 is so arranged as to advance and retreat along an axis A in opposition to both couplings 26, 27. At the lower end face of the connecting coupling 32, are formed engaging teeth 32a which are engaged with engaging teeth 26a, 27a formed at upper end faces of the couplings 26, 27.

Also, in the anchor block 31, is formed an oil passage 31a for supplying operating oil to an oil chamber 36 defined by the anchor block 31 and the connecting coupling 32. When the operating oil is supplied to the oil chamber 36 with a specified oil pressure via the oil passage 31a, the connecting coupling 32 lowers so that its engaging teeth 32a are engaged with both engaging teeth 26a, 27a of the two couplings 26, 27, by which the tool post body 11 is clamped at the resulting angular position. In addition, reference numeral 37 denotes a seal member for preventing any leakage of oil pressure from the oil chamber 36.

Within a hole 27b formed in the stationary-side coupling 27, a spring (gap forming means) 33 is provided for pressing and biasing the connecting coupling 32 upward as viewed in Fig. 4. When the oil passage 31a is opened outward, the operating oil within the oil chamber 36 is discharged outward while the connecting coupling 32 ascends so that the clamping is released. Also when this occurs, an upper end portion 32b of the connecting coupling 32 comes into contact with the lower surface of a slide bearing 34 fixed to the lower surface of the intermediate plate 20b, by which the whole anchor block 31 is pushed up slightly (e.g., about 0.2 mm) beyond the position of the clamping state.

Between the inner circumferential surface of the intermediate plate 20b and the outer circumferential surface of an upper end portion of the anchor block 31, a bearing 38 is interposed. An inner raceway 38a of the bearing 38 is positioned heightwise by tightening a lock nut 40 while being pressed upward in Fig. 4 by a spring 39 for use of position adjustment. Further, an outer raceway 38b is positioned and fixed by tightening a stopper 42 with a bolt 41. In addition, the positional adjustment of the inner raceway 38a is carried out in the state that the intermediate plate 20b has been pushed upward by the connecting coupling 32.

The rotation drive mechanism 43 is so constructed that a rotating gear 44, annular as viewed in plan view, placed within a recessed portion 9a for housing the support plate 9 therein is fixed to the lower surface of the rotational-side coupling 26 with a bolt 44a while a drive gear 47 of an indexing motor 48 is engaged with the rotating gear 44 via intermediate gears 45, 46. As a result, rotation of the indexing motor 48 is transferred to the rotating gear 44 under speed reduction at a specified gear ratio, by which the tool post body 11 is indexed in rotation.

Next, operation and functional effects of the indexing mechanism of this embodiment are explained.

In the state prior to the indexing of the tool post body 11, as shown in the left side part of the axis A in Fig. 4, operating oil is supplied into the oil chamber 36 through the oil passage 31a, so that the connecting coupling 32 is pressed downward in the figure, thus lowering. The engaging teeth 32a of the connecting coupling 32 are engaged with the engaging teeth 26a, 27a of the rotational- and stationary-side couplings 26, 27, by which the tool post body 11 is clamped on the support plate 9 at a specified indexing angular position. In this state, the lower end face of the rotational-side coupling 26 is in contact with the upper surface of the support plate 9.

In the indexing operation of the tool post body 11, as shown in the right side part of the axis A in Fig. 4, the oil passage 31a is opened outward, the connecting coupling 32 is moved up by spring force of a spring 33. As a result, the operating oil within the oil chamber 36 is discharged through the oil passage 31a, causing the engaging teeth 26a, 27a of the two couplings 26, 27 to be disengaged from the engaging teeth 32a of the connecting coupling 32, so that the clamping is released.

With the ascent of the connecting coupling 32, the upper end portion 32b of the connecting coupling 32 pushes the slide bearing 34 upward, making the whole rotating table 20 slightly ascend, so that a gap "a" is formed between the lower end face of the rotational-side coupling 26 and the support plate 9.

In the state that the gap "a" is formed between the lower end face of the rotational-side coupling 26 and the upper end face of the support plate 9, the indexing motor 48 rotates, and this rotation is transferred to the rotating table 20 via the gears 47 to 44, by which the tool post body 11 is indexed to a specified angular position. Accordingly, there never occurs friction between the lower end face of the rotational-side coupling 26 and the upper end face of the support plate 9. In addition, in the axial positioning of the inner raceway 38a of the bearing 38, because the extent to which the lock nut 40 is tightened is adjusted so that the inner raceway 38a comes to a regular position with the rotating table 20 pushed upward by the connecting coupling 32 as described before, there occurs no obstacle to the rotation of the rotating table 20. Also, because the upper end portion 32b of the connecting coupling 32 slides against the slide bearing 34, the connecting coupling 32 is free from abnormal wear.

Then, oil pressure is supplied to the oil chamber 36, and the connecting coupling 32 moves down, so that the engaging teeth 32a of the connecting coupling 32 are engaged with the engaging teeth 26a, 27a of the rotational- and stationary-side couplings 26, 27. As a result, the tool post body 11 is clamped to the aforementioned indexed position.

As shown above, in this embodiment, since the indexing mechanism 10 is so constructed that the connecting coupling 32 is advanced and retreated by oil pressure relative to the rotational-side coupling 26 and the stationary-side coupling 27, the clamping operation is performed by the advance and retreat of only the connecting coupling 32. Accordingly, the indexing time can be reduced as compared with the 2-coupling type in which the whole tool post is moved up and down.

Further, since the gap "a" is formed between the lower surface of the rotational-side coupling 26 and the upper surface of the support plate 9 by slightly pushing up the rotating table 20 concurrently with the operation of releasing the connecting coupling 32 from the clamping, there occurs no frictional contact between the lower end face of the rotational-side coupling 26 and the upper surface of the support plate 9 during the indexing operation. Thus, the wear due to friction can be avoided, so that the problem that the indexing precision in clamping is deteriorated by repeated turning operations can be avoided.

In addition, the above embodiment has been described on a case where the present invention is applied to an indexing mechanism for a tool post of a composite-process lathe. However, the scope of the present invention is not limited to such tool posts. The present invention is applicable also to turning tables in horizontal type machining centers. In essence, the present invention may be applied to any machine tool in which a rotating part with a tool or work affixed thereto is rotation-indexably and clampably mounted on the base.

## Claims

1. An indexing mechanism for machine tools, in which a rotating part to which a tool or work is affixed is rotation-indexably and clampably mounted onto a base, characterized in that a connecting coupling to be engaged with both of a rotational-side coupling fixed to the rotating part and a stationary-side coupling fixed to the base is provided so as to be advanceable and retreatable, and that gap forming means for forming a gap between the rotational-side coupling and the base by an operation of the connecting coupling in such a direction that the engagement is released.
